# FASCICULE DE BREVET EUROPEEN

(11) **EP 2 681 036 B1**
(45) Date de publication et mention de la délivrance du brevet: **06.05.2015**
(21) Numéro de dépôt: 12712311.5
(22) Date de dépôt: 01.03.2012
(51) Int. Cl.: B29C 70/24, B29C 70/86, B29C 70/68, B29B 11/16, B64C 11/30, F01D 7/00, B32B 3/08, F01D 25/28, F04D 29/40, F01D 25/24, B29L 31/08

(54) **PIECE EN MATERIAU COMPOSITE COMPORTANT DES ELEMENTS DE FIXATION**
BAUTEIL AUS EINEM VERBUNDWERKSTOFF MIT ANLÖTELEMENTEN UND HERSTELLUNGSVERFAHREN DAFÜR
COMPONENT MADE OF COMPOSITE MATERIAL COMPRISING BOSS ELEMENTS AND CORRESPONDING PRODUCTION METHOD

(30) Priorité: 03.03.2011 FR 1151740
(43) Date de publication de la demande: 08.01.2014
(73) Titulaire: SNECMA, 75015 Paris (FR)
(72) Inventeur: OLIVIER, Loïc, F-94140 Alfortville (FR)
(74) Mandataire: Desormiere, Pierre-Louis
(86) Numéro de dépôt international: PCT/FR2012/050436
(87) Numéro de publication internationale: WO 2012/117209

(56) Documents cités:
- WO-A2-2005/050409
- DE-A1- 19 834 772
- FR-A1- 2 553 712
- FR-A1- 2 902 802
- US-A- 5 024 874

## Description

### Arrière-plan de l'invention

La présente invention concerne la réalisation de pièces en matériau composite et plus particulièrement de pièces équipées de moyens de d'attache ou de fixation notamment pour le support d'équipements.

Un domaine d'application de l'invention est plus particulièrement la réalisation de pièces en matériau composite structural, c'est-à-dire des pièces de structure à renfort fibreux densifié par une matrice. Les matériaux composites permettent de réaliser des pièces ayant une masse globale moins élevée que ces mêmes pièces lorsqu'elles sont réalisées en matériau métallique. Le renfort fibreux des pièces en matériau composite de géométrie standard, telles que des viroles ou panneaux, est en général réalisé en une seule pièce par tissage multicouche entre des couches de fils de chaîne et des couches de fils de trame. Une fois le renfort densifié par une matrice, celui-ci assure une bonne répartition des efforts mécaniques locaux sur l'ensemble de la pièce conférant ainsi à cette dernière un bon caractère structural et une résistance mécanique élevée.

Dans le cas de pièces en matériau métallique, des équipements ou des supports destinés à la fixation de tels équipements sont directement fixés sur la pièce notamment par soudage ou au moyen de perçages dans la pièce permettant le passage d'organes de fixation tels que des vis ou rivets.

Cependant, dans le cas d'une pièce en matériau composite, il n'est pas possible de souder des supports ou des équipements directement sur la pièce. Par ailleurs, la réalisation de perçages fragilise mécaniquement la pièce car ils créent des interruptions dans la continuité des chemins de transmission des efforts mécaniques. Dans le cas de pièces destinées à l'aéronautique, telles que des carters de turbopropulseurs, les perçages sont interdits dans la zone de rétention de la pièce.

Le document US 5024874 divulgue conformément au préambule de la revendication 1 une structure fibreuse de renfort de pièce en matériau composite, ladite structure étant obtenue par tissage multicouche entre une pluralité de couches de fils de chaîne et une pluralité de couches de fils de trame. La structure fibreuse comprend en outre sur une de ses faces des éléments de fixation.

Le document FR 2 902 802 divulgue un procédé de réalisation d'une pièce en matériau composite conformément au préambule de la revendication 10.

### Objet et résumé de l'invention

Il est donc souhaitable de pouvoir disposer de pièces en matériau composite permettant la fixation d'équipements sur ces derniers, notamment par soudage ou brasage, et ce sans nécessiter de perçages dans le corps structural de la pièce.

A cet effet, selon l'invention, il est proposé une structure fibreuse de renfort de pièce en matériau composite, selon la revendication 1.

Ainsi, il est possible de former à partir de la structure fibreuse selon l'invention des pièces en matériau composite comprenant des éléments de fixation solidaires de la pièce et dont les portions de fixation pourront être utilisées pour la fixation d'équipements sans affaiblissement du caractère structurale de la pièce.

Selon un premier aspect de l'invention, chaque élément de fixation est en matériau métallique, ce qui permet la fixation d'équipements ou d'autres parties d'éléments de fixation sur la pièce notamment par soudage, brasage ou collage métallique.

Selon un deuxième aspect de l'invention, chaque élément de fixation comprend une première et une deuxième portions de fixation s'étendant de chaque côté dudit corps et au-dessus des fils de la structure fibreuse.

Selon un troisième aspect de l'invention, les première et deuxième portions présentent une forme aplatie.

Selon un quatrième aspect de l'invention chaque portion de fixation correspond à une patte de fixation.

Selon un cinquième aspect de l'invention, chaque portion de fixation est prolongée par une patte de retenue disposée sous un ou plusieurs fils de la structure fibreuse.

L'invention a également pour objet une pièce en matériau composite comprenant une structure fibreuse selon l'invention.

Selon un mode de réalisation de l'invention, chaque élément de fixation comprend en outre un cavalier fixé sur chaque portion de fixation.

Selon un aspect de l'invention, la pièce constitue un carter de moteur aéronautique.

L'invention vise également un turbopropulseur comprenant un carter de moteur aéronautique selon l'invention.

L'invention vise encore un aéronef équipé d'au moins un turbopropulseur selon l'invention.

La présente invention propose en outre un procédé de réalisation d'une pièce en matériau composite selon la revendication 10.

Selon un premier aspect du procédé de l'invention, lors de l'insertion sous des fils accessibles depuis une face de la structure fibreuse du corps de chaque élément de fixation, lesdits fils sont détendus de manière à permettre le passage de chaque élément de fixation, lesdits fils étant ensuite retendus.

Selon un deuxième aspect de l'invention, chaque élément de fixation est disposé sur la structure fibreuse en cours de tissage, une ou plusieurs couches supplémentaires étant tissées au-dessus de chaque élément de fixation.

Selon un troisième aspect du procédé de l'invention, lors de l'insertion de chaque élément de fixation sous des fils de la structure fibreuse, l'élément de fixation présente une forme de tige. Après ladite insertion, au moins une partie de l'élément de fixation située au-dessus des fils de la structure fibreuse est écrasée de manière à former une portion de fixation.

Selon un quatrième aspect du procédé de l'invention, lors de la densification de la préforme, la face opposée à la structure fibreuse chaque portion de fixation d'un élément de fixation est traitée de manière à être dépourvue de matrice à l'issue de la densification.

Selon un cinquième aspect du procédé de l'invention, chaque portion de fixation est prolongée par une patte de retenue qui disposée sous un ou plusieurs fils de la structure fibreuse lors de l'insertion du ou des éléments de fixation sous des fils de la structure.

Selon un sixième aspect du procédé de l'invention, chaque élément de fixation comprend en outre un cavalier fixé sur chaque portion de fixation.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective d'un carter de moteur aéronautique conformément à un mode de réalisation de l'invention,
- la figure 2 est une vue schématique en perspective d'une partie d'une structure fibreuse pour la fabrication du carter de moteur aéronautique de la figure 1,
- les figures 3A à 3D sont des vues en coupe trame à échelle agrandie montrant un exemple de disposition de fils de trame dans la structure fibreuse de la figure 2,
- la figure 4 est une vue schématique en perspective montrant l'insertion de deux embases de fixation dans la structure fibreuse de la figure 2,
- la figure 5 est une vue schématique en perspective montrant la structure fibreuse de la figure 2 après l'insertion des embases de fixation,
- la figure 6 est une vue schématique en perspective montrant la mise en forme de la structure fibreuse de la figure 5 avant densification,
- la figure 7 est une vue schématique en perspective montrant la pièce obtenue après densification de la préforme fibreuse de la figure 6,
- la figure 8 est une vue schématique en perspective montrant la partie du carter de moteur aéronautique de la figure 1 munie des embases de fixation,
- la figure 9 est une vue schématique en perspective montrant la partie du carter de moteur aéronautique de la figure 1 munie des embases de fixation et sur lesquelles sont fixés des cavaliers,
- la figure 10 est une vue schématique en perspective montrant l'insertion de deux tiges destinées à former des éléments de fixation dans une structure fibreuse conformément à un autre mode de réalisation,
- la figure 11 est une vue schématique en perspective montrant la structure fibreuse de la figure 10 après l'insertion des tiges et écrasement des extrémités d'une des tiges,
- la figure 12 est une vue schématique en perspective montrant la structure fibreuse de la figure 10 après densification,
- la figure 13 est une vue schématique en perspective montrant l'insertion dans une structure fibreuse d'une embase de fixation conformément à un autre mode de réalisation,
- la figure 14 est une vue schématique en perspective montrant la structure fibreuse de la figure 13 après densification.

### Description détaillée de modes de réalisation

L'invention s'applique d'une manière générale à la réalisation de pièces en matériau composite comprenant un renfort fibreux densifié par une matrice et dont le corps est destiné à maintenir ou supporter des équipements (boitiers, câbles, etc.). On entend ici par « corps », toute partie structurale d'une pièce, en particulier mais non exclusivement, de forme de révolution telle qu'une virole.

Conformément à l'invention, un ou plusieurs éléments de fixation sont intégrés sur au moins une surface du corps afin de permettre notamment la retenue ou fixation d'équipements sans nécessiter de perçage dans le corps de la pièce.

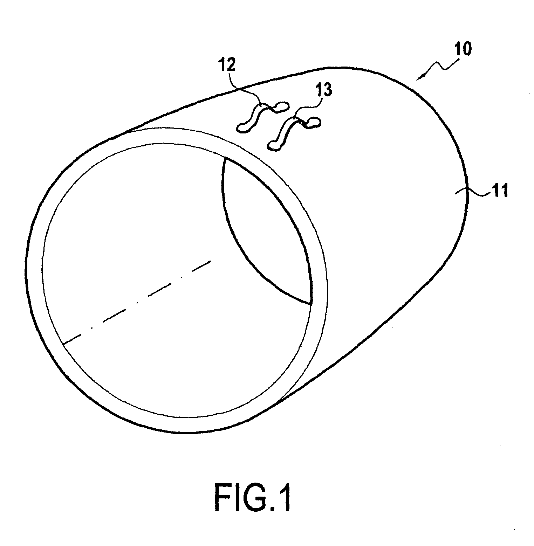

La figure 1 illustre un carter 10 d'un moteur d'avion en matériau composite formé d'une virole 11 comprenant des premier et deuxième éléments de fixation 12 et 13 destinés à permettre l'accrochage d'équipements sur la virole 11 ou le passage et le maintien de câbles (non représentés sur la figure 1).

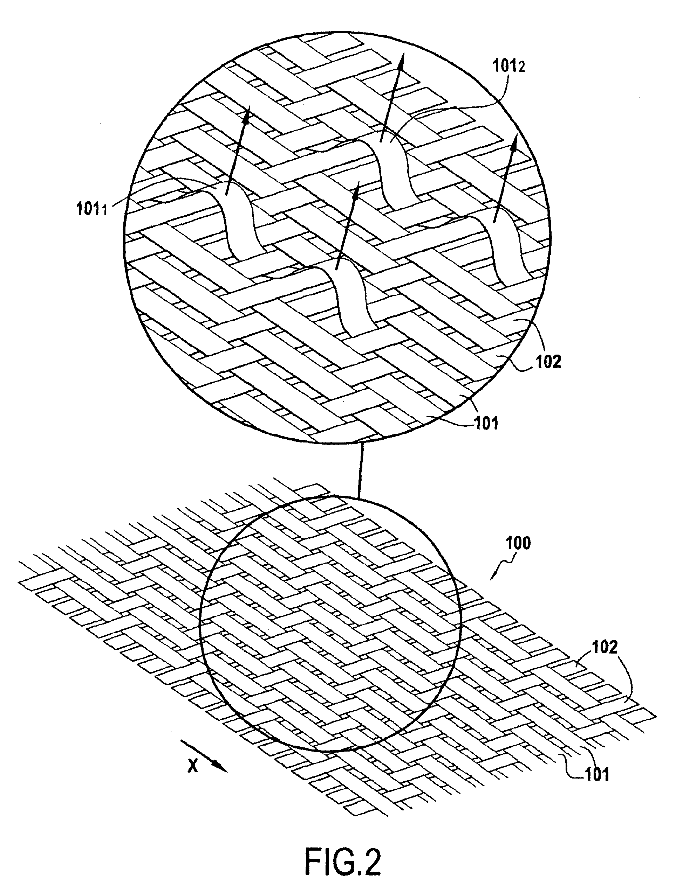

La figure 2 montre très schématiquement une ébauche fibreuse 100 destinée à former le renfort fibreux de la virole 11 du carter 10.

L'ébauche fibreuse 100 est obtenue, comme illustrée schématiquement sur la figure 2, par tissage multicouche réalisé de façon connue au moyen d'un métier à tisser de type jacquard sur lequel on a disposé un faisceau de fils de chaînes 101 ou torons en une pluralité de couches, les fils de chaînes étant liés par des fils de trame 102.

Dans l'exemple illustré, le tissage multicouche est un tissage à armure « interlock ». Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

Par « fils », on entend ici des torons formés chacun d'un ensemble de filaments non tressés. En particulier, chaque fils peut correspondre à un toron de 3000 à 12000 filaments.

D'autres types de tissage multicouche connus pourront bien entendu être utilisés.

L'ébauche fibreuse selon l'invention peut être tissée notamment, mais non exclusivement, à partir de fils de fibres de carbone ou de céramique tel que du carbure de silicium.

Comme illustrée sur la figure 2, l'ébauche fibreuse 100 présente une forme de bande s'étendant en longueur suivant une direction X, l'ébauche 100 étant destinée à former, après mise en forme et densification, la virole 11 du carter 10.

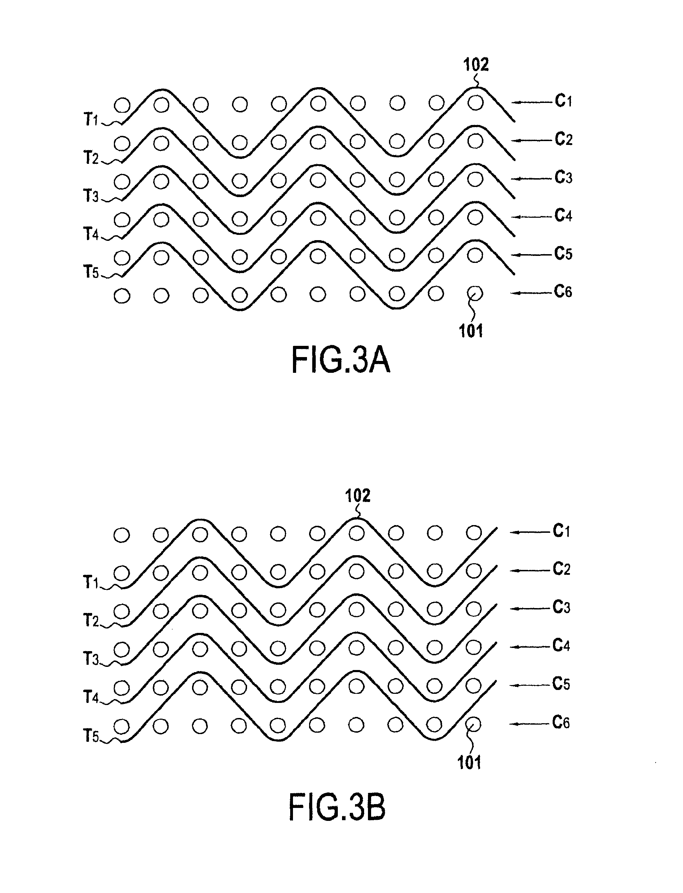

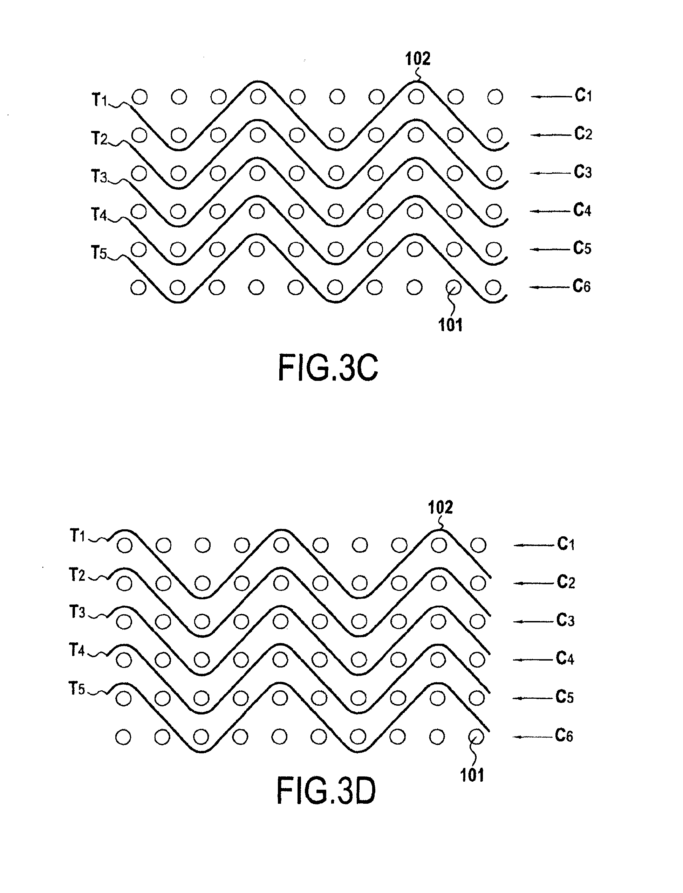

Un mode de tissage multicouche à armure interlock de l'ébauche 100 est montré schématiquement par les figures 3A à 3D qui sont respectivement des vues partielles agrandies de plans en coupe chaîne successifs. Dans cet exemple, l'ébauche 100 comprend 6 couches de fils de chaîne 101 s'étendant dans la direction X. Sur les figures 3A à 3D, les 6 couches de fils de chaîne C₁ à C₆ sont liés par des fils de trame T₁ à T₅. Par souci de simplification, seuls 6 couches de fils de chaîne et 5 couches de fils de trame sont représentés ici, bien entendu suivant les dimensions (largeur et épaisseur) de la structure fibreuse que l'on souhaite obtenir, cette dernière pourra être réalisée avec un nombre de couches de fils de chaîne et de trame ainsi qu'un nombre de fils par couche beaucoup plus importants.

A la fin du tissage, les fils de chaîne et de trame non tissés sont découpés pour extraire l'ébauche 100 représentée sur la figure 2 telle qu'elle est issue du tissage multicouche.

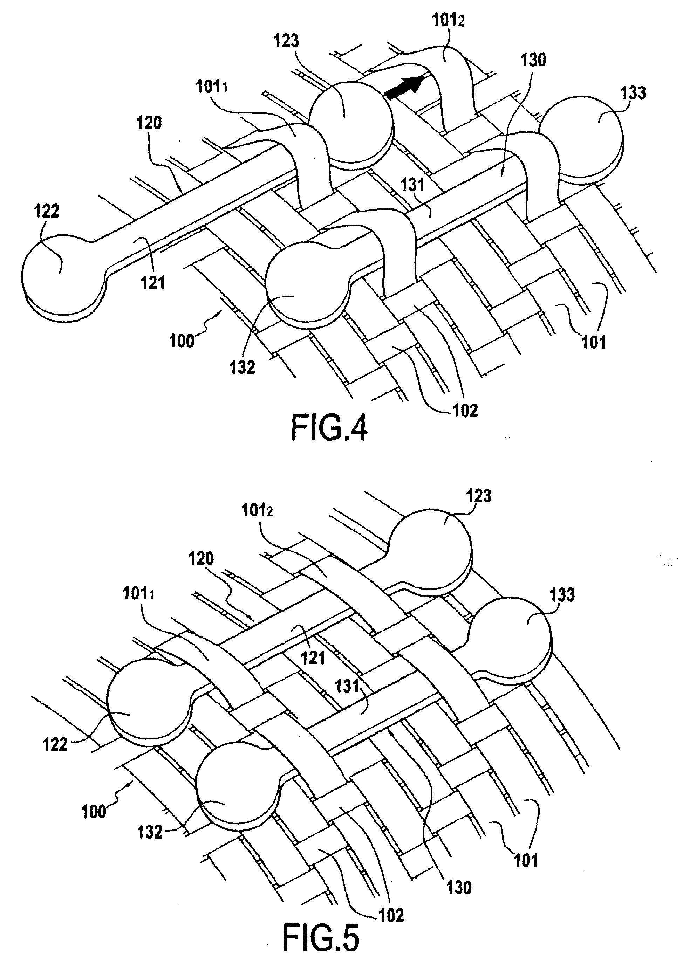

Une fois l'ébauche fibreuse 100 formée, on insère des embases de fxation 120 et 130 sous des fils de la structure fibreuse 120 comme illustré sur la figure 4. Dans l'exemple décrit ici, l'élément 120, respectivement 130, est formé d'un corps 121, respectivement 131, aux extrémités duquel s'étendent deux portions de fixation 122 et 123, respectivement 132 et 133, qui présentent une forme aplatie. Les embases de fixation 120 et 130 sont de préférence, mais non exclusivement, réalisées en matériau métallique afin de permettre la fixation par soudage ou brasure d'autres parties d'éléments de fixation ou d'équipement sur les portions de fixation 122, 123, 132 et 133.

Toujours dans le mode de réalisation décrit ici, des fils de chaîne 101₁ et 101₂ sont tirés localement (figure 2) afin de détendre ces derniers et permettre le passage des corps 121 et 131 respectivement des embases 120 et 130 sous ces fils.

Une fois les embases 120 et 130 ainsi positionnées, les fils chaîne 101₁ et 101₂ sont retendus afin d'être plaqués sur les corps 121 et 131 comme représentés sur la figure 5.

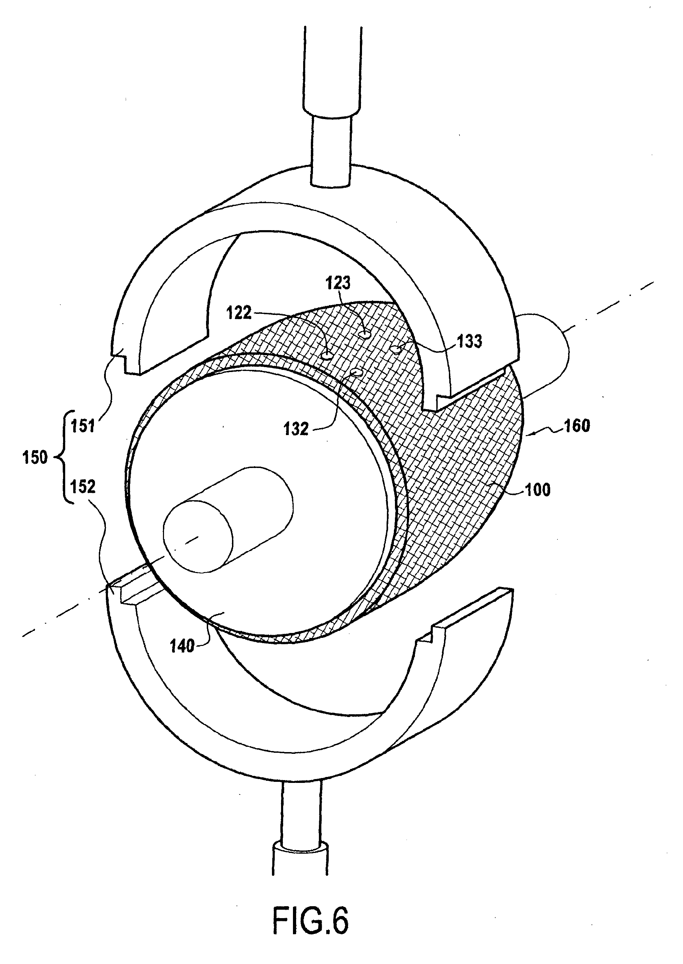

On procède ensuite à la mise en forme de l'ébauche fibreuse 100 pour former la virole 11 du carter 10 de la figure 6. A cet effet, comme illustrée sur la figure 6, l'ébauche fibreuse 100 est mise en forme sur un moule 140, présentant ici la forme d'un mandrin et correspondant à la forme interne du carter 10 à réaliser. Les deux extrémités libres de l'ébauche 100 peuvent être, par exemple, cousues ensembles avant densification ou simplement superposées, ces dernières étant liées entre elles lors de la densification. On obtient ainsi une préforme fibreuse 160 prête à être densifiée. Dans des variantes de réalisation, l'ébauche fibreuse présente une longueur correspondant à plusieurs fois la circonférence du carter.

On procède alors à la densification de la préforme fibreuse 160 qui consiste à combler la porosité de la préforme, dans tout ou partie du volume de celle-ci, par le matériau constitutif de la matrice.

La matrice du matériau composite constituant la structure à profil aérodynamique peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme est placée dans un moule pouvant être fermé de manière étanche avec un logement ayant la forme de la pièce finale moulée. Ici, la préforme est placée entre le moule 140 et un contre-moule 150 en deux parties 151 et 152 présentant respectivement la forme extérieure et la forme intérieure du carter à réaliser. Une fois le contre-moule 150 fermé, on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

Selon un aspect de l'invention, la densification de la préforme fibreuse peut être réalisée par le procédé bien connu de moulage par transfert dit RTM ("Resin Transfert Moulding"). Conformément au procédé RTM, on place la préforme fibreuse 160 entre un moule et un contre-moule présentant respectivement la forme extérieure et la forme intérieure (comme le moule 140 et contre-moule 150) du carter à réaliser. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Quel que soit le procédé de densification utilisé, on prendra soin d'éviter un dépôt de résine ou la formation de matrice sur la face opposée à l'ébauche fibreuse des portions de fixation 122, 123, 132 et 133, par exemple en grattant le flash de résine présent sur cette face ou par tout autre traitement permettant le nettoyage de celle-ci.

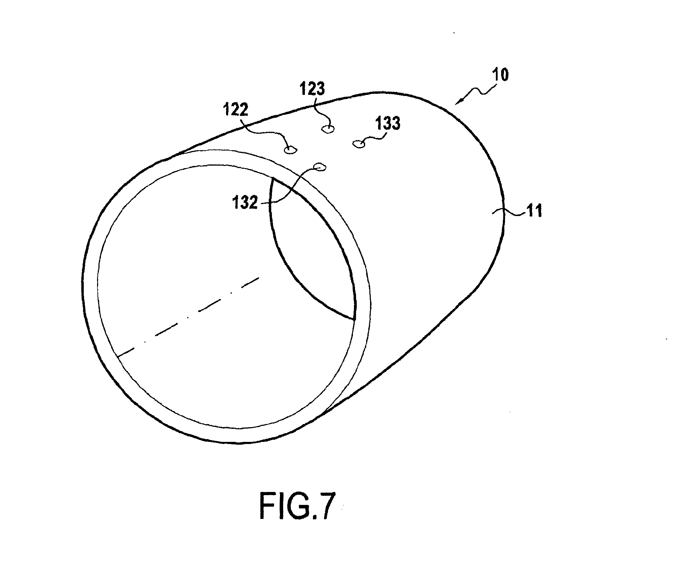

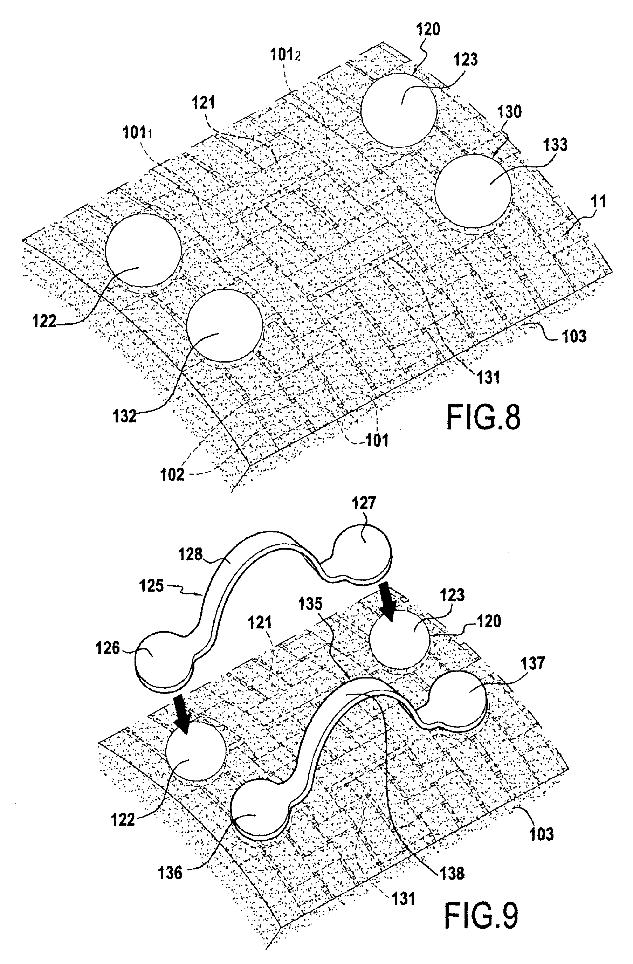

Après l'injection et la polymérisation, la pièce est démoulée. Au final, la pièce est détourée pour enlever l'excès de résine et les chanfreins sont usinés pour obtenir une pièce le carter 10 de la figure 7 formée de la virole 11 qui comporte sur sa surface externe les portions de fixation 122, 123, 132 et 133 des embases de fixation 120 et 130. Comme illustrés sur la figure 8, les corps 121 et 131 respectivement des embases 120 et 130 sont retenus sur la virole 11 du carter à la fois par les fils de chaîne 101₁ et 101₂ et par la résine polymérisée 103 (matrice). Dans ce cas, les éléments de fixation de la pièce en matériau composite selon l'invention sont constitués des embases de fixation 120 et 130.

Comme représentés sur la figure 9, les portions 122, 123, 132 et 133 peuvent être utilisées pour fixer des cavaliers 125 et 135. Plus précisément, le cavalier 125 comprend un corps 128 en forme d'arche qui comporte à ses extrémités des portions de forme aplatie 126 et 127 qui sont fixées respectivement sur les portions de fixation 122 et 123 de l'embase 120, par exemple par soudage, brasage ou collage métallique. De même, le cavalier 135 comprend un corps 138 en forme d'arche qui comporte à ses extrémités des portions de forme aplatie 136 et 137 qui sont fixées respectivement sur les portions de fixation 132 et 133 de l'embase 130, par exemple par soudage, brasage ou collage métallique. Dans ce cas, les éléments de fixation 12 et 13 du carter 10 sont constitués respectivement des embases de fixation 120 et 130 et des cavaliers 125 et 135.

Selon une variante de réalisation, un ou plusieurs équipements sont fixés directement sur les portions de fixation 122, 123, 132 et 133 des embases de fixation 120 et 130 par exemple par soudage, brasage ou collage métallique. Dans ce cas, les éléments de fixation du carter sont constitués uniquement des embases 120 et 130.

Par ailleurs, dans certains cas, comme par exemple lorsque l'ébauche fibreuse est tissée en précontrainte, les fils de chaîne ou de trame de l'ébauche peuvent être difficiles à détendre. Dans de tels cas, l'insertion d'éléments de fixation présentant des parties relativement volumineuse telles que les portions de fixation de forme aplaties peut s'avérer délicate. A cet effet, la présente invention propose d'utiliser des éléments de fixation présentant initialement une forme de tige, cylindrique, rectangulaire ou autre, qui peut être plus facilement insérée sous un ou plusieurs fils, puis de mettre en forme les portions de fixation après insertion.

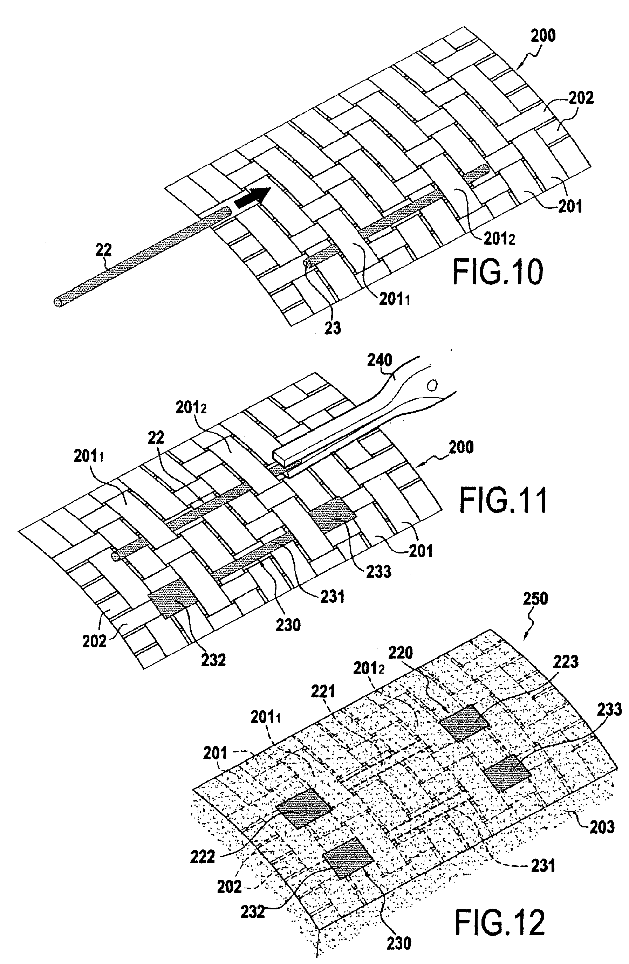

A titre d'exemple, la figure 10 illustre une ébauche fibreuse 200 obtenue par tissage multicouche, par exemple par tissage interlock, entre une pluralité de couches de fils de chaîne 201 et une pluralité de couches de fils de trame 202, ceux-ci étant tissés ensembles avec une précontrainte. Des éléments en forme de tiges cylindriques 22 et 23, par exemple en matériau métallique, sont insérés sous des fils de chaîne 201₁ et 201₂. Grâce à leur forme compacte, les éléments 22 et 23 peuvent être glissés sous des fils de chaîne 201₁ et 201₂ sans avoir à détendre ces derniers. Une fois les éléments 22 et 23 ainsi insérés, leurs extrémités sont écrasées, par exemple au moyen d'une pince 240, afin de former des portions de fixation comme illustré sur la figure 11. Après écrasement des extrémités des éléments 22 et 23 et après mise en forme et densification de l'ébauche 200 comme représentée sur la figure 12, on obtient une pièce en matériau composite 250 comprenant deux éléments de fixation 220 et 230 comprenant des corps 221 et 231 retenus sur la pièce 250 à la fois par les fils de chaîne 201₁ et 201₂ et par la résine polymérisée 203 (matrice) et à l'extrémité desquels sont présents des portions de fixation 222, 223, 232 et 233 présentant une forme aplatie permettant de ménager une surface suffisante pour la fixation d'autres éléments tels que des cavaliers ou des pattes de fixation d'équipements.

De nombreuses variantes de réalisation de l'invention peuvent être envisagées. De telles variantes concernent notamment :
- le nombre et le type de fils (chaîne ou trame) sous lesquels les éléments de fixation peuvent être insérés,
- la forme des éléments de fixation aussi bien en ce qui concerne la forme et les dimensions du corps que des portions de fixation de ces éléments,
- le matériau des éléments de fixation qui n'est pas limité à un matériau métallique,
- le nombre et la disposition des éléments de fixation à la surface de la pièce dont plusieurs peuvent être utilisés ensembles ou réunis entre eux pour former une base de fixation notamment dans le cas de la fixation d'équipements lourds,
- les moyens de fixation utilisés pour fixer des équipements sur les éléments de fixation comme par exemple par soudage, brasage, vissage, serrage, etc.

En outre, la forme et les dimensions des pièces en matériau composite réalisées avec la structure fibreuse de l'invention peuvent être variées et ne pas se limiter notamment à des pièces ayant un corps structural en forme de virole mais à tout autre type de formes (par exemple des secteurs de virole ou des panneaux plans ou courbés) sur lesquelles un ou plusieurs éléments de fixation peuvent être intégrés conformément à l'invention.

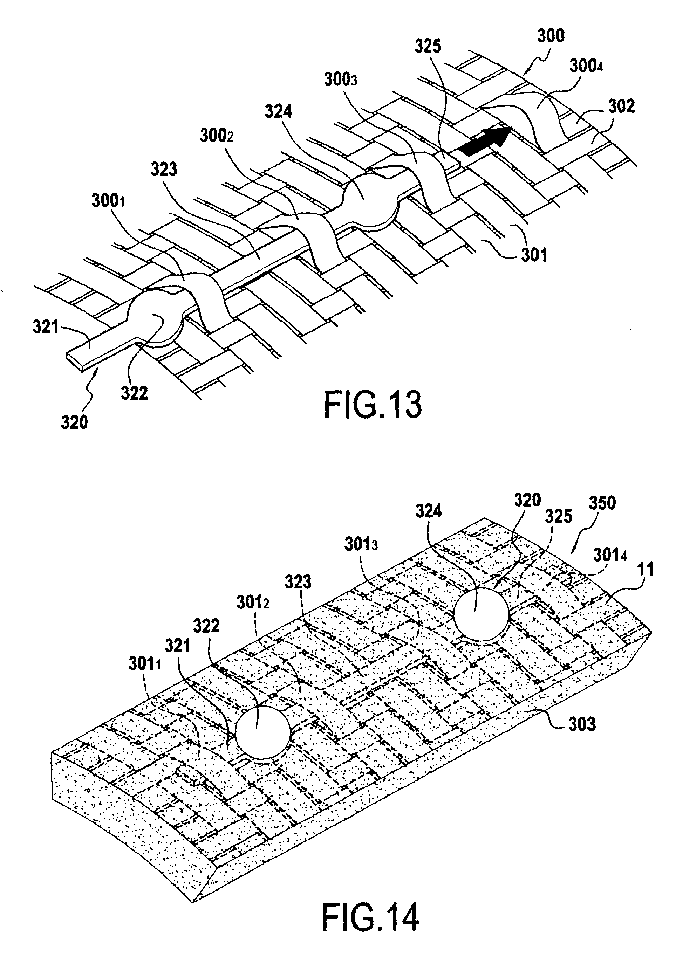

Selon une variante de réalisation, l'embase de fixation peut comprendre une patte de retenue s'étendant aux extrémités de chaque portion de fixation afin d'accroître la tenue mécanique de l'embase notamment vis-à-vis des efforts d'arrachement qui peuvent être exercés sur cette dernière. Comme illustrée sur la figure 13, une embase de fixation 320 comprend un corps 323 qui comporte à ses extrémités une première et deuxième portions de fixation 322 et 324. La première portion de fixation 322 est prolongée du côté opposé au corps 323 par une première patte de retenue 321 tandis que la deuxième portion est prolongée du côté opposé au corps 323 par une deuxième patte de retenue 325. L'embase 320 est insérée dans une ébauche fibreuse 300 formée de la même manière que décrite précédemment pour l'ébauche 100. Des fils de chaîne 301₁, 301₂, 301₃ et 301₄ sont tirés localement afin de détendre ces derniers et permettre le passage de l'embase 320.

Une fois l'embase 320 positionnée, les fils chaîne 301₁, 301₂, 301₃ et 301₄ sont retendus afin d'être plaqués respectivement sur la première patte de retenue 321 (fil 301₁), le corps 323 (fils 301₂ et 301₃) et sur la deuxième patte de retenue 325 (fil 301₄).

Après mise en forme et densification de l'ébauche 300 comme représentée sur la figure 14, on obtient une pièce en matériau composite 350 comprenant un élément de fixation correspondant à l'embase 320 dont le corps 323 et les pattes de retenue 321 et 325 sont maintenus retenus sur la pièce 350 à la fois par les fils de chaîne 301₁ et 301₂ et par la résine polymérisée 303 (matrice) et à l'extrémité desquels sont présents des portions de fixation 322, 323, 332 et 333 présentant une forme aplatie permettant de ménager une surface suffisante pour la fixation d'autres éléments tels que des cavaliers ou des pattes de fixation d'équipements.

Dans le cas de l'utilisation d'un élément de fixation présentant initialement une forme de tige comme décrit ci-avant en relation avec les figures 10 à 12, un élément de fixation du même type que l'embase 320 décrit ci-dessus peut être obtenu en insérant sous plusieurs fils de l'ébauche une tige de longueur adapté et en écrasant des parties de la tige situées à une distance intermédiaire des deux extrémités de celle-ci afin de former des portions de fixation qui sont prolongées par des pattes de retenue.

Par ailleurs, la tenue mécanique des éléments de fixation peut être encore accrue en recouvrant la face des portions de fixation des éléments de fixation située du côté de l'ébauche fibreuse avec un adhésif compatible avec la matrice utilisé pour la densification.

Les parties des éléments de fixation autres que les portions de fixation peuvent être placées indifféremment sous des fils de chaîne, des fils de trame, ou encore à la fois sous des fils de chaîne et de trame (disposition des éléments à 45° par rapport aux directions de chaîne et de trame).

Dans les modes de réalisation décrits ci-avant, l'intégration d'un élément de fixation dans la structure fibreuse est réalisé par passage du corps de l'élément sous des fils de la structure fibreuse qui sont étirés localement et retendus ensuite après le passage et le positionnement du corps des éléments de fixation sous ces fils.

Selon une variante de réalisation, les corps des éléments de fixation peuvent être enserrés dans des fils de la structure fibreuse au moment du tissage de cette dernière. Dans ce cas, un ou plusieurs éléments de fixation, comme par exemple les embases 120, 130 et 320, ou une plusieurs pièces destinées à former des éléments de fixation, comme les tiges 22 et 23, sont disposées sur la structure fibreuse. On tisse alors sur les éléments de fixation ainsi disposés, une ou plusieurs couches supplémentaires à la surface de la texture, une partie des fils de cette ou ces couches supplémentaires enserrant les éléments de fixation ou les pièces destinées à former ces éléments. Selon la densité du tissage de cette ou ces couches supplémentaires, les fils éventuellement présents au-dessus des portions de fixation des éléments de fixation ou des parties des pièces destinées à former ultérieurement les portions de fixation des éléments de fixation, comme les parties des tiges 22, 23 devant être écrasées afin de former les portions de fixation, sont écartés de ces portions ou parties et/ou découpés localement. La suite de la fabrication de la pièce en matériau composite comprenant des éléments de fixation se poursuit comme déjà décrit ci-avant.

## Revendications

1. Structure fibreuse (100) de renfort de pièce (10) en matériau composite, ladite structure étant obtenue par tissage multicouche entre une pluralité de couches de fils de chaîne (101) et une pluralité de couches de fils de trame (102),
la structure fibreuse (100) comprenant en outre au moins sur une de ses faces un ou plusieurs éléments de fixation (12, 13), **caractérisée en ce que** chaque élément de fixation comprend un corps (121, 131) disposé au moins en partie sous des fils (101₁, 101₂) présents sur une face de ladite structure fibreuse et au moins une portion de fixation (122; 132) située au-dessus desdits fils.

2. Structure selon la revendication 1, **caractérisée en ce que** chaque élément de fixation (12; 13) comprend une première et une deuxième portions de fixation (122, 123; 132, 133) s'étendant de chaque côté dudit corps (121; 131) et au-dessus des fils de la structure fibreuse (100).

3. Structure selon la revendication 2, **caractérisée en ce que** lesdites première et deuxième portions (122, 123; 132, 133) présentent une forme aplatie.

4. Structure selon l'une quelconque des revendications 1 à 3, **caractérisée en ce que** chaque portion de fixation (322; 324) est prolongée par une patte de retenue (321 ; 325) disposée sous un ou plusieurs fils de la structure fibreuse.

5. Pièce en matériau composite comprenant une structure fibreuse selon l'une quelconque des revendications 1 à 5 densifiée par une matrice.

6. Pièce selon la revendication 5, **caractérisée en ce que** chaque élément de fixation (12; 13) comprend en outre un cavalier (125; 135) fixé sur chaque portion de fixation.

7. Pièce selon la revendication 5 ou 6, **caractérisée en ce qu'**elle constitue un carter (10) de moteur aéronautique.

8. Turbopropulseur comprenant un carter de moteur aéronautique selon la revendication 7.

9. Aéronef équipé d'au moins un turbopropulseur selon la revendication 8.

10. Procédé de réalisation d'une pièce en matériau composite comprenant les étapes suivantes :
- réalisation d'une structure fibreuse (100) par tissage multicouche entre une pluralité de couches de fils de chaîne (101) et une pluralité de couches de fils de trame (102),
- mise en forme de la structure fibreuse (100),
- densification de la préforme fibreuse (160) par une matrice (103),
**caractérisé en ce qu'**il comprend en outre, avant la densification de la préforme, l'insertion sous des fils (101₁, 101₂) présents sur une face de la structure fibreuse d'un corps (121; 131) d'un ou plusieurs éléments de fixation (12; 13), chaque élément de fixation comprenant en outre au moins une portion de fixation (122; 132) située au-dessus desdits fils.

11. Procédé selon la revendication 10, **caractérisé en ce que**, lors de l'insertion sous des fils (101₁, 101₂) accessibles depuis une face de la structure fibreuse (100) du corps (121; 131) de chaque élément de fixation (12; 13), lesdits fils sont détendus de manière à permettre le passage de chaque élément de fixation, lesdits fils étant ensuite retendus.

12. Procédé selon la revendication 10, **caractérisé en ce que** chaque élément de fixation est disposé sur la structure fibreuse en cours de tissage, une ou plusieurs couches supplémentaires étant tissées au-dessus de chaque élément de fixation.

13. Procédé selon l'une quelconque des revendications 10 à 12, **caractérisé en ce que**, lors de l'insertion de chaque élément de fixation sous des fils (101₁, 101₂) de la structure fibreuse (100), l'élément de fixation présente une forme de tige (22; 23) et **en ce que**, après ladite insertion, au moins une partie de l'élément de fixation située au-dessus des fils de la structure fibreuse est écrasée de manière à former une portion de fixation (222; 223; 232; 234).

14. Procédé selon l'une quelconque des revendications 10 à 13, **caractérisé en ce que** chaque portion de fixation (322; 324) est prolongée par une patte de retenue (321 ; 325) qui est disposée sous un ou plusieurs fils de la structure fibreuse lors de l'insertion du ou des éléments de fixation sous des fils de la structure fibreuse.

15. Procédé selon l'une quelconque des revendications 10 à 14, **caractérisé en ce que** chaque élément de fixation (12, 13) comprend en outre un cavalier (125; 135) fixé sur chaque portion de fixation (122; 123; 132; 133).

## Patentansprüche

1. Faserstruktur (100) zur Verstärkung eines Teils (10) aus Verbundwerkstoff, wobei die Struktur durch Mehrlagenweben zwischen einer Vielzahl von Lagen aus Kettfäden (101) und einer Vielzahl von Lagen aus Schussfäden (102) erhalten wird,
wobei die Faserstruktur (100) ferner wenigstens auf einer ihrer Seiten ein oder mehrere Befestigungselemente (12, 13) umfasst,
**dadurch gekennzeichnet, dass** jedes Befestigungselement einen Körper (121, 131), der wenigstens teilweise unter auf einer Seite der Faserstruktur vorliegenden Fäden (101₁, 101₂) angeordnet ist, sowie wenigstens einen Befestigungsabschnitt (122; 132), der über den Fäden gelegen ist, umfasst.

2. Struktur nach Anspruch 1, **dadurch gekennzeichnet, dass** jedes Befestigungselement (12; 13) einen ersten und einen zweiten Befestigungsabschnitt (122, 123; 132, 133) umfasst, der sich auf jeder Seite des Körpers (121; 131) und über den Fäden der Faserstruktur (100) erstreckt.

3. Struktur nach Anspruch 2, **dadurch gekennzeichnet, dass** der erste und der zweite Abschnitt (122, 123; 132, 133) eine abgeflachte Form aufweisen.

4. Struktur nach einem der Ansprüche 1 bis 3, **dadurch gekennzeichnet, dass** jeder Befestigungsabschnitt (322; 324) durch eine Haltelasche (321; 325), welche unter einem oder mehreren Fäden der Faserstruktur angeordnet ist, fortgesetzt ist.

5. Verbundwerkstoffteil, umfassend eine Faserstruktur nach einem der Ansprüche 1 bis 4, die durch eine Matrix verdichtet ist.

6. Teil nach Anspruch 5, **dadurch gekennzeichnet, dass** jedes Befestigungselement (12; 13) ferner eine Klammer (125; 135), die an jedem Befestigungsabschnitt befestigt ist, umfasst.

7. Teil nach Anspruch 5 oder 6, **dadurch gekennzeichnet, dass** es ein Gehäuse (10) eines Flugzeugtriebwerks bildet.

8. Turboprop-Triebwerk, das ein Flugzeugtriebwerksgehäuse nach Anspruch 7 umfasst.

9. Luftfahrzeug, das mit wenigstens einem Turboprop-Triebwerk nach Anspruch 8 ausgestattet ist.

10. Verfahren zur Herstellung eines Verbundwerkstoffteils, umfassend die folgenden Schritte:
- Herstellen einer Faserstruktur (100) durch Mehrlagenweben zwischen einer Vielzahl von Lagen aus Kettfäden (101) und einer Vielzahl von Lagen aus Schussfäden (102),
- Informbringen der Faserstruktur (100),
- Verdichten des Faservorformlings (160) durch eine Matrix (103),
**dadurch gekennzeichnet, dass** es ferner vor dem Verdichten des Vorformlings das Einfügen eines Körpers (121; 131) eines oder mehrerer Befestigungselemente (12; 13) unter auf einer Seite der Faserstruktur vorliegenden Fäden (101₁, 101₂) umfasst, wobei jedes Befestigungselement ferner wenigstens einen über den Fäden gelegenen Befestigungsabschnitt (122; 132) umfasst.

11. Verfahren nach Anspruch 10, **dadurch gekennzeichnet, dass** beim Einfügen des Körpers (121; 131) eines jeden Befestigungselements (12; 13) unter von einer Seite der Faserstruktur (100) zugänglichen Fäden (101₁, 101₂) die Fäden entspannt werden, um den Durchgang jedes Befestigungselements zu ermöglichen, wobei die Fäden anschließend wieder gespannt werden.

12. Verfahren nach Anspruch 10, **dadurch gekennzeichnet, dass** jedes Befestigungselement auf der im Weben befindlichen Faserstruktur angeordnet wird, wobei eine oder mehrere zusätzliche Lagen über jedem Befestigungselement gewebt werden.

13. Verfahren nach einem der Ansprüche 10 bis 12, **dadurch gekennzeichnet, dass** beim Einfügen eines jeden Befestigungselements unter Fäden (101₁, 101₂) der Faserstruktur (100) das Befestigungselement eine Stangenform (22; 23) aufweist und dass nach dem Einfügen wenigstens ein Teil des Befestigungselements, der über den Fäden der Faserstruktur gelegen ist, zusammengedrückt wird, um einen Befestigungsabschnitt (222, 223; 232, 233) zu bilden.

14. Verfahren nach einem der Ansprüche 10 bis 13, **dadurch gekennzeichnet, dass** jeder Befestigungsabschnitt (322; 324) durch eine Haltelasche (321; 325) fortgesetzt ist, die beim Einfügen des oder der Befestigungselemente unter Fäden der Faserstruktur unter einem oder mehreren Fäden der Faserstruktur angeordnet wird.

15. Verfahren nach einem der Ansprüche 10 bis 14, **dadurch gekennzeichnet, dass** jedes Befestigungselement (12, 13) ferner eine Klammer (125; 135), die an jedem Befestigungsabschnitt (122; 123; 132; 133) befestigt ist, umfasst.

## Claims

1. A fiber structure (100) for reinforcing a composite material part (10), said structure being obtained by multilayer weaving between a plurality of layers of warp yarns (101) and a plurality of layers of weft yarns (102), the fiber structure (100) including, at least on one of its faces, one or more fastener elements (12; 13), **characterized in that** each fastener element comprises a body (121; 131) arranged at least in part under yarns (101₁, 101₂) present on a face of said fiber structure, and at least one fastener portion (122; 132) situated over said yarns.

2. A structure according to claim 1, **characterized in that** each fastener element (12; 13) comprises first and second fastener portions (122, 123; 132, 133) extending on either side of said body (121; 131) and over yarns of the fiber structure (100).

3. A structure according to claim 2, **characterized in that** said first and second portions (122, 123; 132, 133) present a flat shape.

4. A structure according to any one of claims 1 to 3, **characterized in that** each fastener portion (322, 324) is extended by a retaining tab (321, 325) arranged under one or more yarns of the fiber structure.

5. A composite material part comprising a fiber structure according to any one of claims 1 to 5 and densified by a matrix.

6. A part according to claim 5, **characterized in that** each fastener element (12; 13) further includes a strap (125; 135) fastened to each fastener portion.

7. A part according to claim 5 or claim 6, **characterized in that** it constitutes an aeroengine casing (10).

8. A turboprop including an aeroengine casing according to claim 7.

9. An aircraft having at least one turboprop according to claim 8.

10. A method of making a composite material part, the method comprising the following steps:
· making a fiber structure (100) by multilayer weaving between a plurality of layers of warp yarns (101) and a plurality of layers of weft yarns (102);
· shaping the fiber structure (100); and
· densifying the fiber preform (160) with a matrix (103);
the method being **characterized in that** it further comprises, before densifying the preform, inserting a body (121; 131) of at least one fastener element (12; 13) under yarns (101₁, 101₂) present on a face of the fiber structure, each fastener element also including at least one fastener portion (122; 132) situated over said yarns.

11. A method according to claim 10, **characterized in that** during insertion of the body (121; 131) of each fastener element (12; 13) under the yarns (101₁, 101₂) that are accessible from a face of the fiber structure (100), said yarns are loosened in such a manner as to enable each fastener element to pass thereunder, said yarns subsequently being tightened.

12. A method according to claim 10, **characterized in that** each fastener element is arranged on the fiber structure during weaving, with one or more additional layers being woven over its fastener element.

13. A method according to any one of claims 10 to 12, **characterized in that** during insertion of each fastener element under yarns (101₁, 101₂) of the fiber structure (100), the fastener element is in the form of a rod (22; 23), and **in that** after said insertion, at least a portion of the fastener element situated over yarns of the fiber structure is flattened so as to form a fastener portion (222, 223; 232, 234).

14. A method according to any one of claims 10 to 13, **characterized in that** each fastener portion (322; 324) is extended by a retaining tab (321, 325) that is arranged under one or more yarns of the fiber structure during insertion of the fastener element(s) under the yarns of the fiber structure.

15. A method according to any one of claims 10 to 14, **characterized in that** each fastener element (12; 13) also includes a strap (125; 135) fastened on each of the fastener portions (122, 123; 132, 133).
